# EUROPÄISCHE PATENTSCHRIFT

(11) **EP 3 119 562 B1**
(45) Veröffentlichungstag und Bekanntmachung des Hinweises auf die Patenterteilung: **31.07.2019**
(21) Anmeldenummer: 15713373.7
(22) Anmeldetag: 19.03.2015
(51) Int. Cl.: B25J 9/00

(54) **ROBOTERSYSTEM**
ROBOT SYSTEM
SYSTÈME ROBOTISÉ

(30) Priorität: 20.03.2014 DE 102014004075
(43) Veröffentlichungstag der Anmeldung: 25.01.2017
(73) Patentinhaber: YASKAWA Europe GmbH, 85391 Allershausen (DE)
(72) Erfinder: NIEDERMEIER, Josef, 85778 Haimhausen (DE)
(74) Vertreter: Zinnecker, Armin
(86) Internationale Anmeldenummer: PCT/EP2015/000605
(87) Internationale Veröffentlichungsnummer: WO 2015/139841

(56) Entgegenhaltungen:
- EP-A1- 1 375 088
- WO-A1-2011/055225
- DE-A1- 19 904 422
- DE-A1-102005 019 688
- US-A- 5 337 938

## Beschreibung

Die vorliegende Erfindung betrifft ein Verfahren zum Bearbeiten von Werkstücken mit einer Einrichtung, die einen Drehrahmen, wenigstens zwei Roboter, die an dem Drehrahmen vorgesehen sind, und wenigstens einen ersten und einen zweiten Werkstückpositionierer, die an dem Drehrahmen vorgesehen sind, aufweist. Die Erfindung betrifft ferner eine Einrichtung zur Durchführung dieses Verfahrens.

Roboter werden zum Durchführen unterschiedlichster Arbeiten wie Schneiden oder Schweißen von Werkstücken, Positionieren von Werkstücken oder beispielsweise dem Lackieren von Bauteilen genutzt. Hierbei ist es üblich, die Roboter im Zusammenwirken mit peripheren Anlagen wie beispielsweise Werkstückpositionierern oder Sicherheitsschleusen einzusetzen. Werkstückpositionierer werden dabei dazu genutzt, die Werkstücke optimal relativ zu dem Roboter oder den Robotern zu positionieren. Das oder die Werkstücke sind an dem Werkstückpositionierer üblicherweise lösbar befestigt. Zur Bearbeitung mit dem Roboter sind das oder die Werkstücke an dem Werkstückpositionierer befestigt.

Sicherheitsschleusen sind notwendig, wenn Personen zu einem Robotereinsatzbereich zum Beispiel zum Zwecke von Werkstückwechseln Zutritt haben. Um das Personal nicht durch den Robotereinsatz zu gefährden, ist es üblich oder erforderlich, durch die genannten Sicherheitsschleusen oder Sicherheitsbereiche eine Trennung zwischen Robotern und Personal beziehungsweise ein Abschalten der Roboter bei Eindringen in den Sicherheitsbereich zu bewirken.

Dabei ergibt sich das Problem, dass ein Roboter keine Arbeiten an einem Werkstück durchführen kann, wenn sich eine Person in einem Sicherheitsbereich aufhält. Hierdurch wird die Bearbeitungszeit des Werkstücks nachteilig verlängert. Gemäß dem Stand der Technik ist es dabei zwar bekannt, beispielsweise die Abläufe der Roboterbewegung oder der Bewegungen der Werkstückpositionierer zu beschleunigen, um so die Bearbeitungszeiten der Werkstücke niedrig zu halten. Jedoch bedingt eine Beschleunigung der Abläufe einen erheblichen konstruktiven Mehraufwand bei der Ausgestaltung der Komponenten. Dabei müssen sowohl entsprechend leistungsfähige als auch gleichzeitig präzise Tragstrukturen, Antriebe, Getriebe und passende Steuereinrichtungen bereitgestellt werden, was einen erheblichen und problematischen Kostenfaktor darstellt.

Aus der DE 20 2009 018 754 U1 ist eine Einrichtung zum Bearbeiten von Werkstücken bekannt, die einen Drehrahmen, mehrere Roboter und mehrere Werkstückpositionierer aufweist. Die Roboter sind allerdings fest mit dem Boden verbunden.

Die WO 2011/055225 A1 offenbart eine Einrichtung mit einem Drehrahmen, einem an dem diesem befestigten Roboter und mehreren an dem Drehrahmen vorgesehenen Werkstückpositionierern.

Aus der US 8 210 418 B1 ist eine Einrichtung zum Bearbeiten von Werkstücken bekannt.

Die DE-A1-10 2005 019 688 offenbart eine Industrieschweißanlage mit zwei nebeneinander angeordneten Schweißrobotern und einem Werkzeugtisch, an dem Werkzeugaufnahmen gehalten sind, die um jeweils eine horizontale Drehachse drehbeweglich gelagert sind.

Aufgabe der vorliegenden Erfindung ist es, ein verbessertes Verfahren zum Durchführen von Roboterarbeiten bereitzustellen, welches keine Einbußen bei den Bearbeitungszeiten aufweist und welches verglichen mit den aus dem Stand der Technik bekannten Verfahren vereinfacht und günstiger darstellbar ist.

Diese Aufgabe wird erfindungsgemäß durch ein Verfahren mit den Merkmalen des Anspruchs 1 gelöst. Vorteilhafte Weiterbildungen sind Gegenstand der Unteransprüche.

Das erfindungsgemäße Verfahren zum Bearbeiten von Werkstücken umfasst eine Einrichtung, die einen Drehrahmen, wenigstens zwei Roboter, die an dem Drehrahmen vorgesehen sind, und wenigstens einen ersten und einen zweiten Werkstückpositionierer, die an dem Drehrahmen vorgesehen sind, aufweist. Die Roboter und die Werkstückpositionierer werden gemeinsam mit dem Drehrahmen gedreht. Das Verfahren umfasst dabei die Schritte:
Einlegen wenigstens eines ersten Werkstücks in einen ersten Werkstückpositionierer; und
Bearbeiten des ersten Werkstücks durch die Roboter und gleichzeitiges Drehen des Drehrahmens.

Durch eine gemeinsame Anordnung der Roboter und der Werkstückpositionierer an dem Drehrahmen ist es möglich, ein Verfahren bereitzustellen, das dazu geeignet ist, Roboterarbeiten auch dann durchzuführen, wenn sich der Drehrahmen zwischen unterschiedlichen Positionen dreht. Da die Komponenten der Einrichtung Roboter und Werkstückpositionierer und damit auch ein am Werkstückpositionierer positioniertes Werkstück über den Drehrahmen relativ zueinander fixiert sind, entstehen während der Drehung des Drehrahmens und der weiteren daran vorgesehenen Komponenten keine für die Roboterarbeiten nachteiligen Relativbewegungen zwischen Robotern und Werkstück.

Die Roboter und die Werkstückpositionierer sind somit so auf dem beweglichen beziehungsweise rotierenden Drehrahmen vorgesehen, insbesondere montiert, dass sie während der Bewegung beziehungsweise Rotation des Drehrahmens mitbewegt beziehungsweise mitgedreht werden. Die relative Position der Roboter zu den Bearbeitungsstationen beziehungsweise Werkstückpositionierern bzw. dem jeweiligen Werkstück ist somit immer gleich. Die Roboter können damit auch während des Drehens des Drehrahmens an den Bearbeitungsstationen präzise arbeiten. Die Genauigkeit der Arbeiten der Roboter ist unabhängig von einem Grundantrieb des Drehrahmens und dessen Steuerung und Präzision. Auch bei ungleicher Lastverteilung auf den Drehrahmen, das heißt wenn zum Beispiel der gesamte Rahmen kippt oder wackelt bleibt die Genauigkeit der Roboterarbeiten unbeeinflusst oder nahezu unbeeinflusst.

In einem bevorzugten Ausführungsbeispiel ist denkbar, dass das Verfahren ferner den weiteren Schritt umfasst:
Einlegen wenigstens eines zweiten Werkstücks in den zweiten Werkstückpositionierer.

Die gleichzeitige Belegung von einem weiteren Werkstückpositionierer und ggf. von weiteren Werkstückpositionierern mit Werkstücken ermöglicht eine förderliche Reduktion der Standzeit beim Durchführen des Verfahrens. Ist die Bearbeitung des ersten Werkstücks auf dem ersten Werkstückpositionierer abgeschlossen, so können die Roboter verfahrensgemäß nahtlos zur Bearbeitung weiterer Werkstücke auf dem oder den weiteren Werkstückpositionierern übergehen. Somit ist in einem weiteren bevorzugten Ausführungsbeispiel denkbar, dass das Verfahren ferner den Schritt umfasst:
Bearbeiten des zweiten Werkstücks durch die Roboter und gleichzeitiges Drehen des Drehrahmens.

In weiteren bevorzugten Ausführungsbeispielen ist denkbar, dass das Verfahren die Schritte umfasst:
Entnehmen des ersten Werkstücks aus dem ersten Werkstückpositionierer, und/oder
Einlegen wenigstens eines dritten Werkstücks in den ersten Werkstückpositionierer.

Somit ist es möglich, die wenigstens zwei Werkstückpositionierer abwechselnd zur Bearbeitung von Werkstücken zu nutzen und vorteilhaft Standzeiten der Roboter ganz oder nahezu ganz zu eliminieren.

In einem weiteren Ausführungsbeispiel ist denkbar, dass das Bearbeiten des Werkstücks oder der Werkstücke Schweißarbeiten umfasst. Das erfindungsgemäße Verfahren ist mit besonderem Vorteil bei Schweißarbeiten anwendbar.

Die der Erfindung zugrundeliegende Aufgabe wird ferner durch eine Einrichtung mit den Merkmalen des Anspruchs 7 gelöst. Dementsprechend betrifft die vorliegende Erfindung eine Einrichtung zur Durchführung des erfindungsgemäßen Verfahrens, umfassend einen Drehrahmen, wenigstens zwei Roboter, die an dem Drehrahmen vorgesehen sind, und wenigstens zwei Werkstückpositionierer, die an dem Drehrahmen vorgesehen sind. Die Roboter sind gemeinsam mit dem Drehrahmen drehbar.

In einem weiteren bevorzugten Ausführungsbeispiel ist denkbar, dass der Drehrahmen, die Roboter und die Werkstückpositionierer innerhalb eines Sicherheitsbereichs der Einrichtung angeordnet sind und im Normalbetrieb nicht zum Verlassen des Sicherheitsbereichs ausgelegt sind. Der Sicherheitsbereich ist also derart ausgestaltet, dass Drehrahmen, Roboter und Werkstückpositionierer im Normalbetrieb innerhalb des Sicherheitsbereichs angeordnet sind.

Hierdurch wird eine sichere und vereinfachte Ausgestaltung der Einrichtung ermöglicht. Der Sicherheitsbereich kann dabei beispielsweise eine Umzäunung und/oder eine Sensorvorrichtung umfassen, mittels derer sichergestellt wird, dass kein Personal in den Sicherheitsbereich eindringen kann, oder dass die Einrichtung einen Nothalt ausführt, wenn Personal in den Sicherheitsbereich eindringt. Der Begriff Normalbetrieb bedeutet hierbei, dass es sich um den normalen Roboterarbeitsbetrieb zum Bearbeiten von Werkstücken handelt und nicht beispielsweise um den zur Montage oder zur Wartung der Einrichtung notwendigen Betrieb handelt.

In einem weiteren bevorzugten Ausführungsbeispiel ist denkbar, dass der Sicherheitsbereich einen Werkstückwechselbereich, vorzugsweise einen Werkstückwechsel- und Teachbereich umfasst, in dem der Werkstückwechsel, vorzugsweise sowohl der Werkstückwechsel als auch das Teachen von Robotern, durchführbar sind.

Gemeint ist damit, dass derselbe ungeteilte Bereich zum Werkstückwechseln und vorzugsweise auch zum Teachen der Roboter nutzbar ist. Hierdurch ist es vorteilhaft unnötig, einen eigenen, d.h. getrennten Platz zum Programmieren beziehungsweise Teachen der Roboter bereitzustellen, da dieses in dem Einlegebereich beziehungsweise in den Werkstückwechsel- und Teachbereich erfolgen kann. Durch die Kombination von Werkstückwechsel- und Teachbereich kann weiter vorteilhaft die Anzahl der zum Abgrenzen bzw. Betreten des Sicherheitsbereichs notwendigen Türen unter Kostenvorteilen reduziert werden. Gleichfalls wird der gesamte Platzbedarf der Einrichtung reduziert, da die Notwendigkeit eines zusätzlichen, vom Werkstückwechselbereich unterschiedlichen Programmierbereichs entfällt.

In einem weiteren bevorzugten Ausführungsbeispiel ist denkbar, dass der Drehrahmen ein H-Rahmen ist. Die Roboter können dadurch zum Durchführen der Roboterarbeiten besonders gut relativ zu dem Werkstück oder den Werkstücken auf einem mittleren Bereich des insbesondere H-förmigen Rahmens angeordnet sein.

Die Roboter umgibt jeweils ein Schweißschutz wenigstens teilweise. Der Schweißschutz ist mit dem Roboter mitdrehbar ausgebildet. Er kann relativ zum Roboter beziehungsweise relativ zu einem vertikal drehbaren Abschnitt des Roboters unbeweglich sein, sodass er bei einer Drehung des Roboters mitgedreht wird. Da die Roboter der Einrichtung dafür ausgelegt sind, auch während einer Drehung des Drehrahmens Roboterarbeiten durchzuführen, ist es mit einem derartigen Schweißschutz möglich, Schweißarbeiten auch dann wirksam abzuschirmen, wenn diese während einer Drehbewegung der Einrichtung erfolgen.

Nach einer weiteren vorteilhaften Weiterbildung sind die Roboter symmetrisch zur Drehachse des Drehrahmens angeordnet. Hierdurch kann ein Gewichtsausgleich geschaffen werden. Die erfindungsgemäße Einrichtung kann dadurch stabilisiert werden.

Die vorliegende Erfindung ist nicht nur für Roboter zum Durchführen von Schweißarbeiten geeignet, sondern auch zum Durchführen aller Roboterarbeiten, in denen die Problematik eines Werkstückwechsels analog vorliegt.

Ein Ausführungsbeispiel der Erfindung wird nachstehend anhand der beigefügten Zeichnung im einzelnen erläutert: In der Zeichnung zeigt
- Fig. 1: eine perspektivische Ansicht einer erfindungsgemäßen Vorrichtung,
- Fig. 2: die Vorrichtung gemäß Fig. 1 in einer schematischen Ansicht von oben in einer ersten Arbeitsposition,
- Fig. 3: die Vorrichtung gemäß Fig. 1 und 2 in einer weiteren Arbeitsposition,
- Fig. 4: die Vorrichtung gemäß Fig. 1-3 in einer weiteren Arbeitsposition,
- Fig. 5: die Vorrichtung gemäß Fig. 1-4 in einer weiteren Arbeitsposition und
- Fig. 6: die Vorrichtung gemäß Fig. 1-5 in einer weiteren Arbeitsposition.

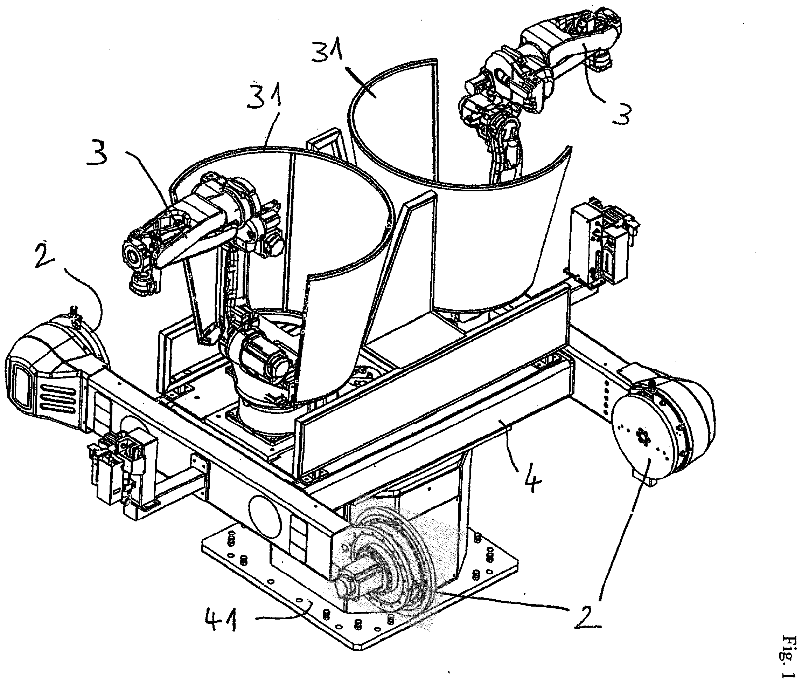

Figur 1 zeigt eine Einrichtung 1 zum Durchführen eines Verfahrens zum Einlegen wenigstens eines Werkstücks in wenigstens einen Werkstückpositionierer 2 und zum Bearbeiten des Werkstücks durch wenigstens einen Roboter 3. Die in Figur 1 gezeigte Einrichtung ist zum Durchführen des erfindungsgemäßen Verfahrens geeignet.

Bei der Einrichtung 1 ist ein Drehrahmen 4 vorgesehen, der um eine vertikale Achse schwenkbar oder drehbar und über einen Flanschbereich 41 mit einem Bodenabschnitt, beispielsweise einem Hallenboden innerhalb einer Werkhalle verbunden ist. Auf dem Drehrahmen 4 sind im gezeigten Ausführungsbeispiel der Figur 1 zwei Roboter 3 zum Bearbeiten von nicht gezeigten Werkstücken vorgesehen. Die Roboter 3 stehen dabei so mit dem Drehrahmen 4 in Verbindung, dass sie gemeinsam mit diesem um die vertikale Schwenkachse des Drehrahmens 4 verschwenkbar sind. Die Roboter 3 können zusätzlich um ihre eigenen Schwenkachsen bewegt werden. Denkbar ist dabei auch eine Verankerung des Drehrahmens 4 an einem Deckenbereich beispielsweise einer Produktionshalle, sodass die Einrichtung 1 hängend vorgesehen sein kann.

In Figur 1 sind ferner zwei Werkstückpositionierer 2 erkennbar. Jeder der beiden Werkstückpositionierer 2 besteht aus zwei einander gegenüberliegenden Teilen, die jeweils eine Befestigungsscheibe umfassen. Das in der Zeichnung nicht dargestellte Werkstück wird zwischen diesen beiden einander gegenüberliegenden Befestigungsscheiben lösbar befestigt. In der Fig. 1 sind drei von insgesamt vier Befestigungsscheiben der Werkstückpositioniere 2 erkennbar. Die Befestigungsscheiben der Werkstückpositionierer 2 sind mit dem Drehrahmen 4 verbunden. Wie die Roboter 3 können auch die Werkstückpositionierer 2 gemeinsam mit dem Drehrahmen 4 um dessen vertikale Schwenkachse geschwenkt werden. Diese Anordnung von Drehrahmen 4, Robotern 3 und Werkstückpositionierern 2 ermöglicht es, während des Verschwenkens des Drehrahmens 4 Roboterarbeiten an von den Werkstückpositionierern 2 positionierten und festgehaltenen Werkstücken durchzuführen.

Der Drehrahmen 4 ist im gezeigten Ausführungsbeispiel als H-Rahmen ausgeführt, was eine besonders vorteilhafte Anordnung beispielsweise der Befestigungsscheiben der Werkstückpositionierer 2 an den Endpunkten des H-Rahmens ermöglicht. Gleichzeitig ist es möglich, mehrere Roboter 3 im mittleren Bereich des H-Rahmens so anzuordnen, dass die Roboter 3 einfachen Zugriff auf die von den Werkstückpositionierern 2 positionierten Werkstücke haben.

Um die Roboter 3 ist im Ausführungsbeispiel der Figur 1 jeweils ein Schweißschutz 31 vorgesehen. Somit kann in dem Fall, in dem es sich bei den Robotern 3 um Schweißroboter handelt, ein entsprechender Schutz vor UV-Strahlung gewährleistet werden. Dabei ist der Schweißschutz 31 jeweils mit dem entsprechenden Roboter 3 so verbunden, dass er beim Verschwenken des Roboters 3 um dessen vertikale Achse ebenfalls mitverschwenkt wird. Hierdurch wird beispielsweise verhindert, dass eine Roboter 3 von dem ihm zugeordneten Schweißschutz 31 in seiner Bewegungsfreiheit eingeschränkt wird und zum Beispiel nicht alle ihm zugeordneten Werkstücke bearbeiten kann.

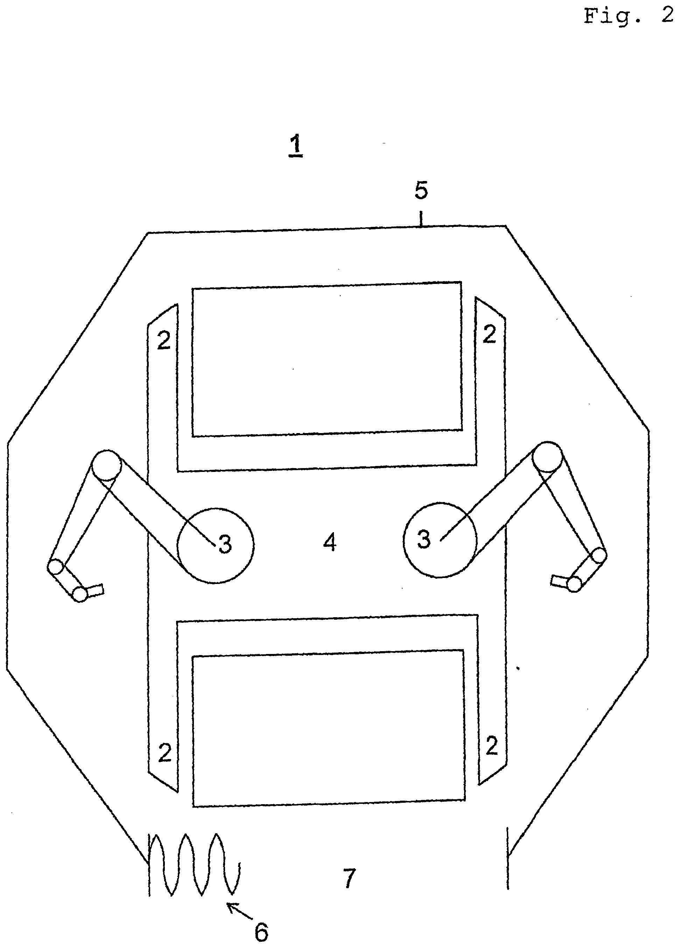

Figur 2 zeigt eine schematische Draufsicht auf die Einrichtung 1. Die Einrichtung 1 ist dabei in einer ersten Position 1, bei der die Drehung des Drehrahmens 4 0° beträgt. Die Einrichtung 1 ist in einem Sicherheitsbereich 5 angeordnet. In einem Normalbetrieb, das heißt in einem Betrieb, in dem die Einrichtung die Bearbeitung des Werkstücks oder der Werkstücke ausführt, befindet sich die gesamte Einrichtung 1 innerhalb des Sicherheitsbereichs 5. In einem vorderen Bereich des Sicherheitsbereichs 5 ist eine Schranke oder ein Zugangstor 6 geöffnet dargestellt. In dem geöffneten Zustand der Schranke 6 kann Bedienpersonal auf die Einrichtung 1 zugreifen. Dies kann zum Beispiel zum Zwecke eines Werkstückwechsels notwendig sein oder um Teacharbeiten an einem Roboter oder an beiden Robotern durchzuführen.

In der Position 1 der Figur 2 befindet sich wenigstens ein erster Werkstückpositionierer 2 im Werkstückwechsel- und Teachbereich 7. Dadurch ist es dem Bedienpersonal möglich, ein fertig bearbeitetes Werkstück aus dem Sicherheitsbereich 5 zu entnehmen und anschließend ein zu bearbeitendes Werkstück in dem Werkstückpositionierer 2 zu positionieren. Die Roboter 3 führen dabei keine Arbeiten im Werkstückwechsel- und Teachbereich 7 durch um das Bedienpersonal nicht unnötig zu gefährden. Denkbar ist aber, dass die Roboter 3 in einem vom Werkstückwechsel- und Teachbereich 7 entfernten Bereich Arbeiten an einem anderen Werkstück oder an anderen Werkstücken durchführen. In der in Figur 2 gezeigten Position 1 ist es ferner denkbar, Teacharbeiten an den Robotern 3 durchzuführen, das heißt die Programmierung von neuen Arbeitsvorgängen durchzuführen.

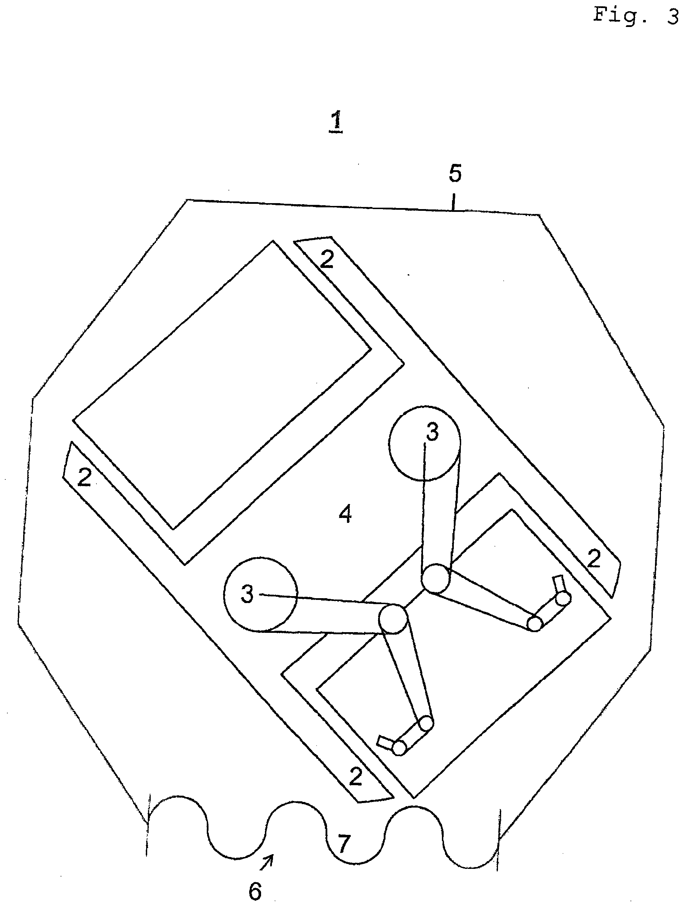

In Figur 3 ist eine Position 2 der Einrichtung 1 gezeigt, in der der Drehrahmen 4 um 45° gegen die Uhrzeigerrichtung gedreht ist. Die Schranke 6 ist geschlossen und die Roboter 3 führen Arbeiten an einem oder mehreren Werkstücken durch. Die Bearbeitung kann dabei ab dem Moment erfolgen, ab dem die Schranke 6 geschlossen ist und sich somit kein Personal mehr im Werkstückwechsel- und Teachbereich 7 befindet.

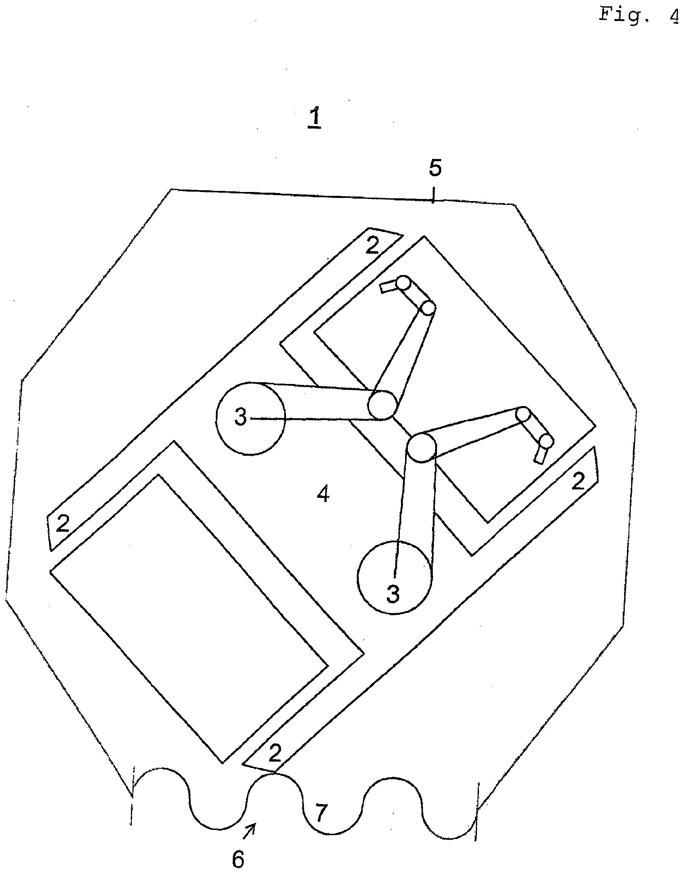

Figur 4 zeigt eine Position 3 der Einrichtung 1, bei der der Drehrahmen 4 um 135° gegen den Uhrzeigersinn gedreht ist und bei der wie in Position 2 auch Werkstücke von den Robotern 3 während des Drehvorgangs des Drehrahmens 4 bearbeitet werden. Hierbei nähert sich wenigstens ein dem ersten Werkstückpositionierer 2 gegenüberliegend angeordneter zweiter Werkstückpositionierer 2 dem Werkstückwechsel- und Teachbereich 7. In wenigstens einem zweiten Werkstückpositionierer 2 kann dabei wenigstens ein fertig bearbeitetes Werkstück positioniert sein.

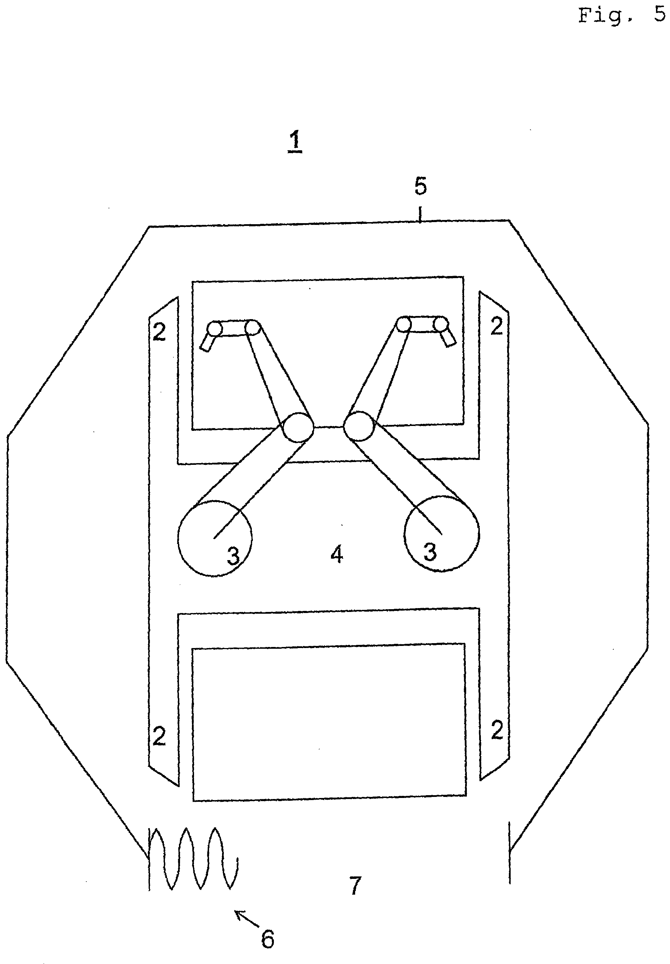

Figur 5 zeigt eine Position 4, in der der Drehrahmen 4 verglichen mit Position 1 um 180° geschwenkt ist. Der erste Werkstückpositionierer 2, an dem noch Roboterarbeiten durchgeführt werden, hat sich somit weitestmöglich vom Werkstückwechsel- und Teachbereich 7 entfernt. Der zweite Werkstückpositionierer 2 befindet sich dafür im Werkstückwechsel- und Teachbereich 7. Die Schranke 6 kann nun analog zur Position 1 geöffnet werden. Bedienpersonal kann somit einen Werkstückwechsel durchführen. Hierbei ist es nicht notwendig, die Roboterarbeiten an dem anderen Werkstück einzustellen, da diese in einem von den Werkstückwechsel- und Teachbereich 7 beabstandeten Bereich fortgeführt werden können.

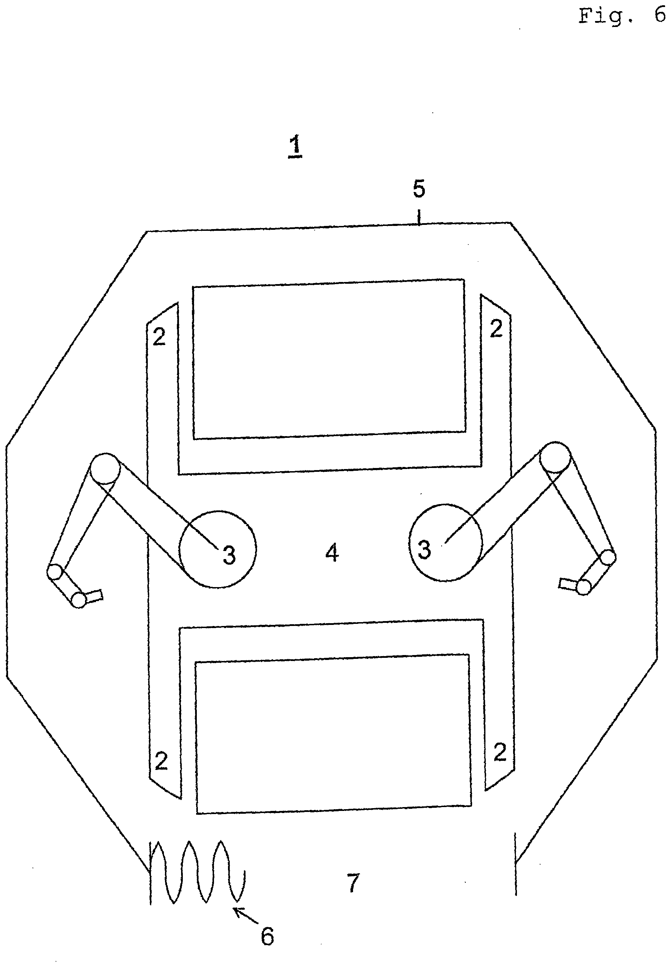

Figur 6 zeigt eine Position 5, in der der Drehrahmen 4 wie in Position 4 um 180° relativ zu Position 1 verdreht ist. Die Roboter 3 befinden sich in einer Neutralposition. Werkstückwechsel und/oder Teacharbeiten können vom Bedienpersonal im Werkstückwechsel- und Teachbereich 7 durchgeführt werden.

Der Drehrahmen 4 kann zunächst in einer Richtung um 180° gedreht werden und anschließend um weitere 180° in derselben Richtung. Es ist allerdings auch möglich, den Drehrahmen 4 zunächst in einer Richtung um 180° zu drehen und anschließend um 180° in der Gegenrichtung zu drehen.

Wie aus Fig. 1 ersichtlich ist jeder Schweißschutz 31 mit dem zugehörigen Roboter 3 verbunden. Er ist an einem Teil des Roboters 3 befestigt, der um eine vertikale Achse rotiert. Der Schweißschutz 31 verläuft zylinderförmig oder trichterförmig nach oben, wobei der Trichter sich vorzugsweise nach oben erweitert. Dabei verläuft der Schweißschutz 31 vorzugsweise über einen Winkelbereich von mehr als 180°. Die Höhe des Schweißschutzes 31 ist an den Arbeitsbereich des Roboters angepasst. Sie kann niedriger, genauso hoch oder höher sein als die höchste Arbeitsposition des Werkzeugs, insbesondere des Schweißwerkzeugs, des Roboters.

## Patentansprüche

1. Verfahren zum Bearbeiten von Werkstücken mit einer Einrichtung (1), die einen Drehrahmen (4), wenigstens zwei Roboter (3), die an dem Drehrahmen (4) vorgesehen sind, wobei die Roboter (3) jeweils ein Schweißschutz (31) wenigstens teilweise umgibt, wobei der Schweißschutz (31) mit dem jeweiligen Roboter mitdrehbar ausgebildet ist, und wenigstens einen ersten und einen zweiten Werkstückpositionierer (2), die an dem Drehrahmen (4) vorgesehen sind, aufweist, mit den Schritten:
Einlegen wenigstens eines ersten Werkstücks in den ersten Werkstückpositionierer (2); und
Bearbeiten des ersten Werkstücks durch die Roboter (3) und gleichzeitiges Drehen des Drehrahmens (4).

2. Verfahren nach Anspruch 1, **gekennzeichnet durch** den weiteren Schritt:
Einlegen wenigstens eines zweiten Werkstücks in den zweiten Werkstückpositionierer (2).

3. Verfahren nach Anspruch 2, **gekennzeichnet durch** den weiteren Schritt: Bearbeiten des zweiten Werkstücks durch die Roboter (3) und gleichzeitiges Drehen des Drehrahmens (4).

4. Verfahren nach einem der vorhergehenden Ansprüche, **gekennzeichnet durch** den weiteren Schritt:
Entnehmen des ersten Werkstücks aus dem ersten Werkstückpositionierer (2).

5. Verfahren nach Anspruch 4, **gekennzeichnet durch** den weiteren Schritt:
Einlegen wenigstens eines dritten Werkstücks in den ersten Werkstückpositionierer (2).

6. Verfahren nach einem der vorhergehenden Ansprüche, **dadurch gekennzeichnet, dass** das Bearbeiten des Werkstücks oder der Werkstücke Schweißarbeiten umfasst.

7. Einrichtung (1) zur Durchführung eines Verfahrens nach einem der Ansprüche 1 bis 6, umfassend
einen Drehrahmen (4), wenigstens zwei Roboter (3), die an dem Drehrahmen (4) vorgesehen sind, und wenigstens zwei Werkstückpositionierer (2), die an dem Drehrahmen (4) vorgesehen sind,
wobei die Roboter (3) jeweils ein Schweißschutz (31) wenigstens teilweise umgibt, wobei der Schweißschutz (31) mit dem jeweiligen Roboter mitdrehbar ausgebildet ist.

8. Einrichtung (1) nach Anspruch 7, **dadurch gekennzeichnet, dass** der Drehrahmen (4), die Roboter (3) und die Werkstückpositionierer (2) innerhalb eines Sicherheitsbereichs (5) der Einrichtung (1) angeordnet sind und im Normalbetrieb nicht zum Verlassen des Sicherheitsbereichs (5) ausgelegt sind.

9. Einrichtung (1) nach Anspruch 8, **dadurch gekennzeichnet, dass** der Sicherheitsbereich (5) einen Werkstückwechselbereich, vorzugsweise einen Werkstückwechsel- und Teachbereich (7), umfasst, in dem der Werkstückwechsel, vorzugsweise sowohl der Werkstückwechsel als auch das Teachen von Robotern (3), durchführbar ist.

10. Einrichtung (1) nach einem der Ansprüche 7 bis 9, **dadurch gekennzeichnet, dass** der Drehrahmen (4) ein H-Rahmen ist.

11. Einrichtung (1) nach einem der Ansprüche 7 bis 10, **dadurch gekennzeichnet, dass** die Roboter (3) symmetrisch zur Drehachse des Drehrahmens (4) angeordnet sind.

## Claims

1. A method of machining workpieces using a device (1) which has a rotating frame (4), at least two robots (3) which are provided at the rotating frame (4), with a respective welding protector (31) at least partly surrounding the robots (3), with the welding protector (31) being configured co-rotatable with the respective robot, and at least one first and one second workpiece positioner (2) which are provided at the rotating frame (4), comprising the steps:
placing at least one first workpiece into the first workpiece positioner (2); and
machining the first workpiece by the robots (3) and simultaneously rotating the rotating frame (4).

2. A method in accordance with claim 1, **characterized by** the further step:
placing at least one second workpiece into the second workpiece positioner (2).

3. A method in accordance with claim 2, **characterized by** the further step:
machining the second workpiece by the robots (3) and simultaneously rotating the rotating frame (4).

4. A method in accordance with one of the preceding claims, **characterized by** the further step:
removing the first workpiece from the first workpiece positioner (2).

5. A method in accordance with claim 4, **characterized by** the further step:
placing at least one third workpiece into the first workpiece positioner (2).

6. A method in accordance with one of the preceding claims, **characterized in that** the machining of the workpiece or workpieces comprises welding work.

7. A device (1) for carrying out a method in accordance with one of the claims 1 to 6, comprising
a rotating frame (4), at least two robots (3) which are provided at the rotating frame (4), and at least two workpiece positioners (2) which are provided at the rotating frame (4).
with a respective welding protector (31) at least partly surrounding the robots (3), with the welding protector (31) being configured co-rotatable with the respective robot.

8. A device (1) in accordance with claim 7, **characterized in that** the rotating frame (4), the robots (3) and the workpiece positioners (2) are arranged within a safety zone (5) of the device (1) and are configured not to leave the safety zone (5) in normal operation.

9. A device (1) in accordance with claim 8, **characterized in that** the safety zone (5) comprises a workpiece changing region, preferably a workpiece changing and teaching region (7), in which the workpiece changing, preferably both the workpiece changing and the teaching of robots (3), can be carried out.

10. A device (1) in accordance with one of the claims 7 to 9, **characterized in that** the rotating frame (4) is an H frame.

11. A device (1) in accordance with one of the claims 7 to 10, **characterized in that** the robots (3) are arranged symmetrically with respect to the axis of rotation of the rotating frame (4).

## Revendications

1. Procédé de transformation de pièces comprenant un dispositif (1), qui comporte un cadre rotatif (4), au moins deux robots (3), qui sont prévus sur le cadre rotatif (4), une protection de soudage (31) entourant respectivement au moins en partie les robots (3), la protection de soudage (31) étant réalisée rotative avec le robot respectif, et au moins un premier et un deuxième positionneur de pièce (2), qui sont prévus sur le cadre rotatif (4), comprenant les étapes consistant à :
insérer au moins une première pièce dans le premier positionneur de pièce (2) ; et
transformer la première pièce au moyen des robots (3) et faire tourner simultanément le cadre rotatif (4).

2. Procédé selon la revendication 1, **caractérisé par** l'étape supplémentaire consistant à :
insérer au moins une deuxième pièce dans le deuxième positionneur de pièce (2).

3. Procédé selon la revendication 2, **caractérisé par** l'étape supplémentaire consistant à :
transformer la deuxième pièce au moyen des robots (3) et faire tourner simultanément le cadre rotatif (4).

4. Procédé selon l'une des revendications précédentes, **caractérisé par** l'étape supplémentaire consistant à :
retirer la première pièce du premier positionneur de pièce (2).

5. Procédé selon la revendication 4, **caractérisé par** l'étape supplémentaire consistant à :
insérer au moins une troisième pièce dans le premier positionneur de pièce (2).

6. Procédé selon l'une des revendications précédentes, **caractérisé en ce que** la transformation de la pièce ou des pièces comprend des travaux de soudage.

7. Dispositif (1) destiné à exécuter le procédé selon l'une des revendications 1 à 6, comprenant
un cadre rotatif (4), au moins deux robots (3), qui sont prévus sur le cadre rotatif (4), et au moins deux positionneurs de pièce (2), qui sont prévus sur le cadre rotatif (4),
une protection de soudage (31) entourant respectivement au moins en partie les robots (3), la protection de soudage (31) étant réalisée rotative avec le robot respectif.

8. Dispositif (1) selon la revendication 7, **caractérisé en ce que** le cadre rotatif (4), les robots (3) et les positionneurs de pièce (2) sont disposés dans une zone de sécurité (5) du dispositif (1) et sont conçus pour ne pas quitter la zone de sécurité (5) en fonctionnement normal.

9. Dispositif (1) selon la revendication 8, **caractérisé en ce que** la zone de sécurité (5) comprend une zone de changement de pièce, de préférence une zone de changement de pièce et d'apprentissage (7), dans laquelle le changement de pièce, de préférence aussi bien le changement de pièce que l'apprentissage de robots (3), peut/peuvent être effectué(s).

10. Dispositif (1) selon l'une des revendications 7 à 9, **caractérisé en ce que** le cadre rotatif (4) est un cadre en H.

11. Dispositif (1) selon l'une des revendications 7 à 10, **caractérisé en ce que** les robots (3) sont disposés de manière symétrique par rapport à l'axe de rotation du cadre rotatif (4).
